# EUROPEAN PATENT SPECIFICATION

(11) **EP 2 473 750 B1**
(45) Date of publication and mention of the grant of the patent: **06.11.2013**
(21) Application number: 10742038.2
(22) Date of filing: 07.06.2010
(51) Int. Cl.: F16D 65/10

(54) **BRAKE DRUM WITH A FRICTION LINER**
BREMSTROMMEL MIT REIBUNGSAUSKLEIDUNG
TAMBOUR DE FREIN AVEC GARNITURE DE FRICTION

(30) Priority: 01.09.2009 IN DE18022009
(43) Date of publication of application: 11.07.2012
(73) Proprietor: Director General, Defence Research & Development Organisation, 110 011-New Delhi (IN)
(72) Inventor: SHAH, Arun Kumar, Thane 421506 (IN); DESHMUKH, Vinay Prabhakar, Thane 421506 (IN); RAO, Boda Rama Krishna, Thane 421506 (IN); DOMMETI, Satya Gowtam, Thane 421506 (IN); MOHAPE, Mahesh Rajaram, Thane 421506 (IN); RAO, Ardi Gourav, Thane 421506 (IN); PANDAV, Shivdas Gurunath, Thane 421506 (IN)
(74) Representative: Cabinet Plasseraud
(86) International application number: PCT/IN2010/000375
(87) International publication number: WO 2011/027354

(56) References cited:
- EP-A2- 0 879 975
- US-A- 4 436 139
- US-A1- 2005 072 640
- US-A1- 2005 217 950

## Description

### Technical Field

The subject matter described herein, in general, relates to brake drums and in particular, relates to a brake drum with a friction liner.

### Background

Typically, there are two types of brakes that can be used in vehicles, viz., disc brakes or drum brakes. A drum brake assembly includes a brake drum over which the wheels are mounted, a brake shoe assembly, and a friction liner. The brake drum is a cylindrical component, which houses the brake shoe assembly. The friction liner can be provided either on an inner surface of the brake drum or on an outer surface of a brake shoe or on both the surfaces. During operation, the brake shoes engage with the friction liner on the inner surface of the brake drum to slow or stop the rotation of the wheel mounted on the brake drum, in response to a braking event.

Typically, brake drums are manufactured using cast iron or steel to provide strength to the drum brake assembly. These brake drums are heavy due to the cast iron or steel content. Sophisticated brake drums utilize a metal matrix composite (MMC) of an Al alloy as the friction liner. However, the process of manufacturing the same requires costly machinery, and involves vacuum and inert environments. Also, the machining of MMC is a cumbersome and difficult process. Additionally, an inner shell or the friction liner is either press-fitted or cast in an outer shell or body of the brake drum. In such brake drums, the friction liner tends to contract towards its center on cooling, resulting in severe stresses or de-bonding at its interface with the outer shell, due to the differences in the coefficient of thermal expansions of the material of the outer shell and the material of the friction liner. Also, interfacial problems associated with the composites made by ex-situ methods, lead to inferior wear properties.

Document EP 0879975 discloses a brake drum according to the preamble of claim 1.

### Summary

This summary described herein is directed to a brake drum according to claim 1 and to the manufacturing of a brake drum with a friction liner as defined in claim 6 and which are further described below in the detailed description.

Due to an increased volume fraction of the reinforcement particles present in the friction liner, better wear resistance and enhanced life of the brake drum is achieved.

The aforementioned features, aspects, and advantages of the present subject matter will be better understood with reference to the following description and appended claims. This summary is provided to introduce a selection of concepts in a simplified form. This summary is not intended to identify key features or essential features of the claimed subject matter, nor is it intended to be used to limit the scope of the claimed subject matter.

### Brief Description of Drawings

The detailed description is described with reference to the accompanying figures. In the figures, the left-most digit(s) of a reference number identifies the figure in which the reference number first appears. The same numbers are used throughout the drawings to reference like features and components. The features, aspects, and advantages of the subject matter will be better understood with regard to the following description, appended claims, and accompanying drawings where:
**Fig. 1** illustrates a sectional view of an exemplary mould for casting a brake drum with a functionally graded metal matrix composite (FGMMC) liner according to an embodiment of the present subject matter.
**Fig. 2** illustrates a sectional view of the functionally graded metal matrix composite (FGMMC) material pipe.
**Fig. 3** illustrates an exemplary location of the functionally graded metal matrix composite (FGMMC) ring in the mould, according to an embodiment of the present subject matter.
**Fig. 4(a)** illustrates an exemplary brake drum with a multiple layered functionally graded metal matrix composite (FGMMC) ring as friction liner, according to an embodiment of the present subject matter.
**Fig. 4(b)** illustrates the exemplary brake drum with a single layered functionally graded metal matrix composite (FGMMC) ring as friction liner according to an embodiment of the present subject matter.
**Fig. 5** illustrates an exemplary method of manufacturing the brake drum with the functionally graded metal matrix composite (FGMMC) liner of **Fig. 4(b)**, according to an embodiment of the present subject matter.

### Detailed Description

The subject matter disclosed herein relates to the manufacturing of a brake drum having a functionally graded metal matrix composite (FGMMC) liner.

Typically, a brake drum includes an outer shell or body of the brake drum and an inner shell or friction liner. The outer shell can be manufactured using a variety of materials such as aluminum alloys in order to reduce the overall weight of the brake drum. The friction liner of the brake drum is usually made of a metal matrix composite (MMC) of the Al alloy, which is typically applied on an inner surface of the brake drum. The friction liner is attached to the outer shell of the brake drum through protrusions or fins created on the inner surface of the brake drum. The friction liner is then either press-fitted or heated in order to attach it to the outer shell of the brake drum.

Conventionally, a metal matrix composite (MMC) is used for both the outer shell and the friction liner of the brake drum because of its high specific modulus, strength and wear resistance. For example, aluminum MMC have been found to possess high wear resistance and low friction coefficient with increasing volume fraction of reinforcement particles. However, the surface bonding between the outer shell and friction liner is inefficient because distributing the MMC at the interface between the friction liner and the inner surface of the outer shell or in the corners of protrusions or fins of the brake drum is difficult. Further, utilizing the strength of the MMC effectively is also difficult. Some schemes suggest the use of vacuum melting furnace and extrusion machines for the purpose of bonding the outer shell and the friction liner. However, such schemes are very expensive.

In one embodiment, to provide enhanced wear properties, the outer shell of the brake drum can be made of an aluminum (Al) alloy or an Al alloy MMC, and the friction liner is made of a functionally graded metal matrix composite (FGMMC) material. The friction liner is alternatively referred to as FGMMC liner hereinafter. The FGMMC liner has a volume fraction distribution of reinforcement particles, for example, ceramic particles such as titanium carbide (TiC) and titanium di-boride (TiB₂), which varies continuously from an inner to an outer layer of the FGMMC materials.

The use of the reinforcement material in the metal matrix achieves a combination of properties not attainable by either of the materials individually. For example, use of ceramic fibers/particulates offers increased specific stiffness, improved wear resistance, higher bulk toughness, and decreased coefficient of thermal expansion. Further, the graded volume fraction distribution provides continuously changing properties across different layers of the FGMMC liner. Also, the properties of the FGMMC liner can be optimized for use at high temperature and high shearing forces that can generally arise during a braking event.

In the present embodiment, the friction liner or FGMMC liner is an FGMMC ring. The FGMMC ring can be made by centrifugal casting of a molten metal matrix composite material having ceramic particles as a reinforcement material and a metal alloy as a metallic base matrix material. Using centrifugal casting method, heavier ceramic particles entrapped in the molten metal matrix composite are displaced towards the outer layer under centrifugal forces. Thus, the FGMMC ring includes a metal layer substantially void of reinforcement material on one side and a functionally graded composition layer of ceramic and metal on the other side. The functionally graded composition layer of ceramic and metal has high toughness and also prevents de-bonding between the functionally graded ceramic and metal layer in the FGMMC ring and the metal layer of an FGMMC lined brake drum.

Further, the FGMMC ring obtained through centrifugal casting is pre-heated and mounted in a mould of a brake drum, the FGMMC ring acting as a core for the brake drum. A molten metal alloy such as an Aluminum (Al) alloy is then poured into the sand mould to form the brake drum. During solidification, the outer surface of the FGMMC ring fuses or gets attached to a surface of the outer shell of the brake drum. On solidification of the molten metal alloy, the FGMMC lined brake drum is taken out of the sand mould. In one embodiment, the ceramic particle free region, corresponding to the inner metallic layer of the FGMMC ring is removed, thus leaving a functionally graded ceramic layer having a high volume fraction of ceramic particles. This functionally graded layer of the FGMMC ring acts as the friction liner in the FGMMC lined brake drum.

As the FGMMC liner is attached to the outer shell of the brake drum while the material of the brake drum is in the molten state, the bonding between the brake drum and the FGMMC liner is much stronger than that obtained by conventional press fit methods. Also, the use of FGMMC material as the friction liner for the brake drum provides an economical technique to manufacture light weight brake drums having high wear resistance. The FGMMC liner has more volume fraction of in-situ ceramic particles, which have better interface with the matrix, thus imparting better wear properties. The reinforcement side doesn't require any machining operations. The FGMMC lined brake drum can be used in braking systems implemented in vehicles, cranes, elevators, etc.

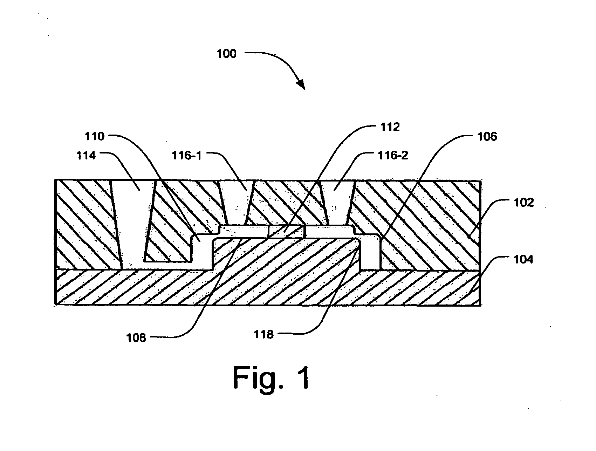

**Fig. 1** illustrates a sectional view of an exemplary mould **100** for casting a brake drum with a functionally graded metal matrix composite (FGMMC) liner, such a brake drum hereinafter referred to as FGMMC lined brake drum. The mould **100** of the FGMMC lined brake drum is prepared using a pattern (not shown in **Fig. 1**) of the FGMMC lined brake drum. The pattern can be made of a variety of materials such as wood, metal or plastic. The mould **100** may be a sand mould or a permanent mould. In one embodiment, the mould **100** of the FGMMC lined brake drum is created in a moulding box. The moulding box includes a top half called cope **102** and a bottom half called drag **104**. The pattern of the FGMMC lined brake drum is placed in the cope **102** and the drag **104** and a sand mixture is poured all around the pattern.

Based on the pattern of the FGMMC lined brake drum, a lower surface **106** of the cope **102** and an upper surface **108** of the drag **104** define a mould cavity **110** of the mould **100**. In case of a sand mould, an annular cavity in the pattern forms a cylindrical body **112** of sand that connects the cope **102** and drag **104** substantially in a center of the mould cavity **110**. The cope **102** and the drag **104** are aligned to face each other and at least one runner **114** is formed in the cope **102**. The runner **114** can be used to pour molten metal alloy, for example, Al alloy, into the mould cavity **110**. Additionally, small passageways or risers **116-1** and **116-2** collectively referred to as risers **116,** are created in the cope **102** which avoid the shrinkage of the mould **100**.

In one embodiment, to ensure that that the surface bonding between the outer shell and the inner shell or friction liner of the brake drum is good, the friction liner is first prepared from at least one FGMMC pipe in accordance with an embodiment of the present subject matter. The FGMMC pipe (not shown in **Fig. 1**) is then cut into at least one FGMMC ring. The FGMMC ring is pre-heated before placing it on an inner surface **108** of the drag **104**. The molten metal alloy is then poured into the mould cavity **110** of the mould **100** to form the FGMMC lined brake drum. The process of making the FGMMC pipes and the FGMMC liner therefrom will be discussed in detail in the subsequent figures.

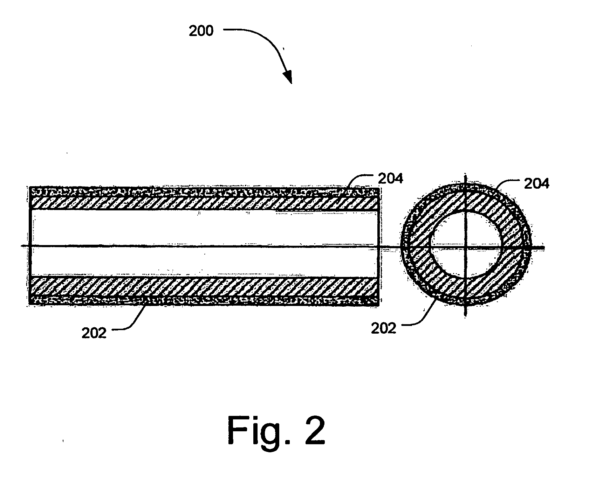

**Fig. 2** illustrates a sectional view of a functionally graded metal matrix composite (FGMMC) material pipe **200,** from which the FGMMC ring can be made.

An FGMMC material is composed of a metallic base matrix material, hereinafter referred to as matrix, which is reinforced with fibers or particulates of a reinforcement material to achieve a combination of properties of both the matrix and the reinforcement material. In addition, the FGMMC material is characterized by a continuous variation in the volume fraction of the reinforcement material across different layers of the FGMMC material thereby providing varying properties across the different layers. For example, a ceramic-metal FGMMC material has a characteristic transition of material properties with the ceramic-metal mixing ratio varying from one layer to the other. The FGMMC material shows a consecutive change of properties along its thickness, showing ceramic properties on its ceramic-metal side and metal properties on its metal side. However, in the inter-layers between the two sides, the properties experience a continuous transition through the thickness.

The FGMMC material properties can be optimized for use in real environment which usually include severe temperature conditions. Additionally, since material properties such as mechanical properties are dependent on the volume fraction of the reinforcement material of the FGMMC material, the transition of volume fraction can be designed to control the material properties to suit the requirements. As the FGMMC material can be designed for use at high temperatures and abrasive conditions based on the metal matrix, the reinforcement material and the volume fraction distribution of the reinforcement particulates, the FGMMC material can be advantageously implemented as the inner shell or friction lining on brake drums.

For the purpose of using the FGMMC material as a friction liner, the FGMMC material pipe **200** is prepared from the MMC material. In one embodiment, the matrix of the FGMMC material is made of the same material as that of the brake drum such as aluminum (Al) or its alloys. The reinforcement material used can be Titanium Carbide (TiC), Titanium Di-boride (TiB₂), Aluminium Oxide (Al₂O₃), Silicon Carbide (SiC). Boron Carbide (B₄C), fly-ash, graphite, etc. Additionally, volume fraction, size, and shape of the reinforcement material can be chosen according to the desired material properties. The size of the reinforcement particulates can range from sub-micron to micron level such as 0.2µm to 25µm. In said embodiment, the reinforcement particulates of sub-micron size are used. The shape of the reinforcement particulates can be spherical, rod-like, angular, needle, flaky, cuboid, etc.

In an embodiment, an Aluminum-Ceramic metal matrix composite (AlC-MMC) having Al alloy as the matrix and a ceramic, for example, TiC, as the reinforcement material is used to prepare the FGMMC material pipe **200**. In another embodiment an in-situ reinforcement is carried out, wherein the particles are generating in the melt itself, for example, by additing titanium bearing flux such as K₂TiF₆ and carbon to aluminium melt to make Al-TiC composite. The FGMMC material pipe **200** is prepared by centrifugal casting. However, it will be appreciated that the FGMMC material pipe **200** can also be prepared by other methods known in the art. In centrifugal casting, solidification of AlC-MMC material takes place in a rotating cylindrical mould under the influence of centrifugal forces generated by a rotational or spinning motion.

In one implementation, a molten AlC-MMC is poured into the permanent mould rotating about its axis at a speed ranging from 300 to 3000 rpm. Due to such high speed rotation, heavier particles within the AlC-MMC material move towards the walls of the permanent mould due to the centrifugal forces and form the FGMMC material pipe **200** with increasing thickness. In said implementation, the molten AlC-MMC where TiC is used as the reinforcement material and Al alloy as the matrix, the density of TiC is more than that of the Al alloy. Thus, the molten AlC-MMC poured into the rotating mould forms the FGMMC material pipe **200** with multiple layers such that a high fraction of the reinforcement material gets segregated towards an outer periphery or outer layer **202** of the FGMMC material pipe 200 and the Al alloy with negligible reinforcement material accumulates in an inner layer 204 of the FGMMC material pipe **200**.

In one embodiment, the inner layer **204** is a layer of Al alloy void of reinforcement material. Depending on a desired thickness of the friction liner of the brake drum, the FGMMC material pipe **200** having the outer layer **202** of a desired thickness is prepared. Accordingly, the volume fraction of reinforcement particles in the outer layer **202** is more as compared to a typical MMC friction liner.

In another embodiment, depending on the comparative densities of the matrix and the reinforcement material, the volume fraction distribution of reinforcement particles in the inner layer **204** and the outer layer **202** can get interchanged.

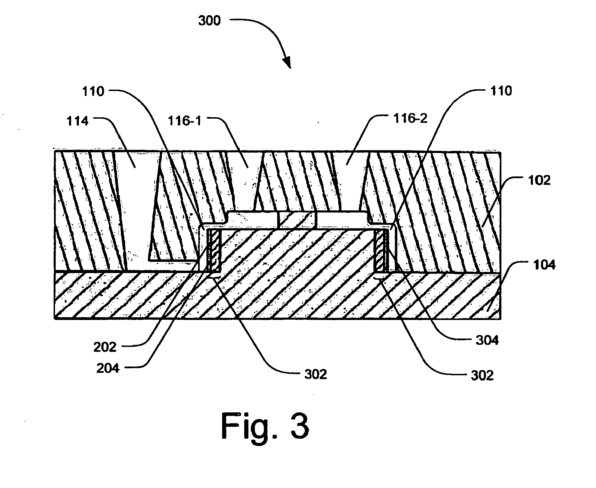

The FGMMC material pipe **200**, with varying concentrations of the reinforcement material and the Al alloy, is cut into at least one FGMMC ring (not shown in Fig.2) of a predefined length for lining the brake drum. The placement of the FGMMC ring on the FGMMC lined brake drum is described in **Fig. 3**.

**Fig. 3** illustrates a sectional view of an exemplary system **300** representing the location of an FGMMC ring **302** in the mould **100**. As described before, the FGMMC material pipe **200** with varying concentration of the reinforcement particles and the Al alloy is obtained by centrifugal casting. The FGMMC pipe **200** is then cut into a cylindrical FGMMC ring **302** having a pre-defined length.

In one embodiment, the FGMMC ring **302** has two layers, namely the inner layer **204** and the outer layer **202**, as present in the FGMMC material pipe **200**. The inner layer **204** can be a layer of Al alloy void of a reinforcement material such as TiC and TiB2. The outer layer **202** can be an Al alloy layer having a high volume fraction of the reinforcement material. In addition to the high volume fraction of the reinforcement material in the FGMMC ring **302**, a pre-determined fraction of Al alloy facilitates in allowing a reliable fusion and bonding of the FGMMC ring **302** with an interface **304** of molten metal.

In an embodiment, the FGMMC ring **302** is pre-heated to a predetermined temperature, of about 450°C, and mounted on the mould **100**. The placement of the FGMMC ring 302 is done in such a way that the inner layer 204 faces the inner surface **118.** Once the FGMMC ring **302** is placed, a molten metal alloy such as molten Al alloy, is poured into the mould cavity **110** through the runner **114** in the mould **100**. As a result, the molten Al alloy fills the mould cavity **110** and also flows over the interface **304** between the outer layer **202** and the mould cavity **110**. Upon solidification, the molten metal alloy is attached to the outer layer **202** of the FGMMC ring **302** and takes up a shape of the mould cavity **110**. In addition to the increased volume fraction of reinforcement particles in the outer layer **202**, the FGMMC ring **302** also has a pre-defined fraction of the matrix such as Al alloy that facilitates reliable fusion and bonding of the outer layer **202** of the FGMMC ring **302** with the molten Al alloy at the interface **304**.

In another embodiment, during the manufacturing of the FGMMC material pipe **200**, the outer layer **202** can be interchanged with the inner layer **204** such that the outer layer **202** is a layer of Al alloy void of the reinforcement material such as ceramic particles like B₄C, and the inner layer **204** is an A1 alloy layer having a high volume fraction of the reinforcement particles in a reinforcement material like B₄C. This interchange can be obtained a result of the relative difference in densities between the matrix and the reinforcement material, in a case where the density of the reinforcement material such as B₄C is less than the density of the matrix such as molten A1 alloy. The interchange of the layers can reduce the manufacturing costs related to machining the layer which is void of reinforcement material. In addition, better surface bonding can be achieved as the inner layer **204** is an A1 alloy layer and is of the same material as that of the outer shell of the FGMMC lined brake drum.

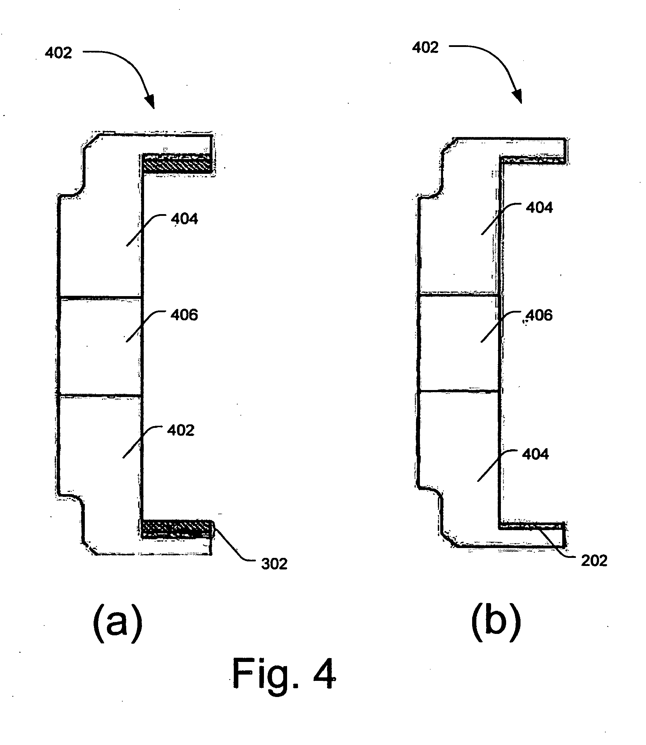

**Fig. 4(a)** illustrates an exemplary brake drum **402** with a friction liner made of FGMMC material having multiple layers and **Fig. 4(b)** illustrates the exemplary brake drum 402 with the friction liner made of FGMMC material having a single layer.

Once the molten metal alloy that is poured into the mould **100** solidifies, the mould **100** is broken and the runner **114** and the risers **116** are removed to obtain the brake drum **402** with the FGMMC ring **302**. In an embodiment, the FGMMC ring **302** is the friction liner. The FGMMC lined brake drum **402** is made of an outer shell **404** or a body of the brake drum and the friction liner. The FGMMC lined brake drum **402** also has a bore **406** in the center for facilitating a connection with an axle.

In one embodiment, the outer layer **202** is the layer of Al alloy void. of the reinforcement material and the inner layer **204** is the Al alloy layer having a high volume fraction of the reinforcement particles. In said embodiment, none of the layers need to be machined out and the FGMMC ring **302** with multiple layers serves as the friction liner. Thus, an FGMMC lined brake drum **402** is obtained that includes an outer shell **404** and the FGMMC ring **302**. In addition, in said embodiment, a better surface bonding is achieved as the outer layer **202** is the Al alloy layer void of reinforcement material and is of the same material as that of the outer shell of the FGMMC lined brake drum **402**.

In another embodiment, when the inner layer **204** is the layer of Al alloy void of the reinforcement material and the outer layer **202** is the Al alloy layer having a high volume fraction of the reinforcement material, the inner layer **204** is removed such that the outer layer **202** of the FGMMC ring **302** serves as the friction liner of the FGMMC lined brake drum **402**. After the inner layer **204** is machined out, the thickness and the high volume fraction of the sub-micron size reinforcement particles in the reinforcement material such as TiC in the outer layer **202** imparts the properties of a reliable frictional surface. Thus, an FGMMC lined brake drum **402** is obtained that includes the outer shell **404** and a single layer (the outer layer **202**) as the friction liner. The outer layer **202** having a high volume fraction of the reinforcement material acts as a frictional surface at which the brake shoe(s) come in contact for the braking action.

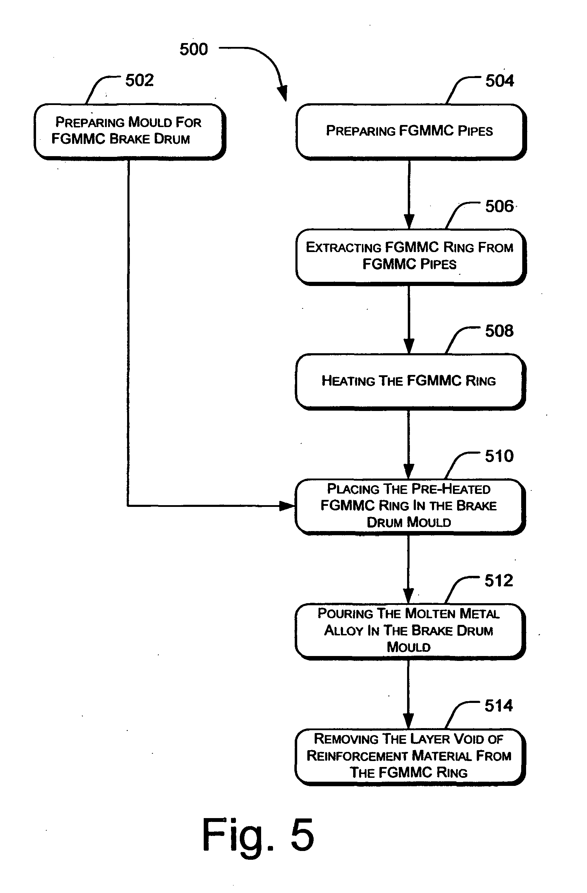

**Fig. 5** illustrates an exemplary method **500** for manufacturing the FGMMC lined brake drum **402**. The order in which the method is described is not intended to be construed as a limitation, and any number of the described method blocks can be combined in any order to implement the method, or an alternative method. Additionally, individual blocks may be deleted from the method without departing from the spirit and scope of the subject matter described herein.

At block **502**, the mould **100** is prepared for casting the FGMMC lined brake drum **402**. Using a variety of techniques known in the art, the mould **100** can be prepared by using the pattern of the FGMMC lined brake drum **402**. In one embodiment, the mould **100** for manufacturing of the FGMMC lined brake drum **402** can be prepared using sand.

At block **504**, the FGMMC pipe **200** is prepared. In said embodiment, an MMC material is transformed into FGMMC pipes **200** using centrifugal casting. Such a transformation results in one or more layers or gradients in the FGMMC pipe **200** under the effect of centrifugal force due to the difference in density between the matrix and the reinforcement material. Thus, in one implementation, a two layered FGMMC pipe **200** is formed in which the material (matrix or reinforcement material) with higher density is in the outer layer **202** and the one with lower density is segregated towards the inner layer **204**. In one embodiment, the outer layer **202** is an Al alloy layer having a high volume fraction of the sub-micron size reinforcement particles in reinforcement material like TiC and the inner layer is an Al alloy layer substantially void of the reinforcement material.

At block **506,** the FGMMC ring **302** is extracted. The FGMMC pipe **200** is cut into the FGMMC ring **302** of a pre-determined length. For example, the FGMMC ring **302** has a length of 60mm. In one embodiment, out of the two functionally graded layers, the outer layer **202** alone may be used as the friction liner for the FGMMC lined brake drum **404**. In another embodiment, the FGMMC ring **302** and hence, both the outer layer **202** and the inner layer **204** may be used as the friction liner. In one implementation, the inner layer **202** is around 3mm thick and the outer layer **204** is around 7mm thick.

At block **508**, the FGMMC ring **302** is heated. The FGMMC ring **302** is heated at a pre-defined temperature, for example, about 450°C.

At block **510**, the pre-heated FGMMC ring **302** is then placed in the mould **100**. The FGMMC ring **302** is placed in such a way that the inner layer **204** faces the inner surface **118** of the drag **104**.

At block **512**, a selected molten metal alloy, for example molten Al alloy, is poured into the mould **100**. The molten Al alloy is poured into the mould cavity **110** through the runner **114**. When the molten Al alloy flows over the interface **304**, it fuses with the FGMMC ring **302**. In another embodiment, other metallic alloys can also be used instead of Al alloy for the body of the brake drum and the matrix in the FGMMC material.

At block **514**, the Al alloy layer that is substantially void of the reinforcement material is removed from the FGMMC ring **302**. The FGMMC lined brake drum **402** having the FGMMC ring **302** is taken out of the mould **100**. In one embodiment, the inner layer **204** of the FGMMC ring **302** is machined to provide the fmal FGMMC lined brake drum **402**. The thickness and the concentration of the outer layer **202** is adjusted in such a way that the outer layer **202** becomes the friction liner of the FGMMC lined brake drum after machining the inner layer **204**, which is the metallic layer void of reinforcement material.

In another embodiment, the inner layer **204** and the outer layer **202** can be interchanged when the density of the reinforcement material such as B₄C is less than the density of the matrix such as molten Al alloy. In this case, machining out the layer void of reinforcement material is not required. Instead, it will facilitate in better surface bonding as the inner layer **204** is an Al alloy layer and hence, is of the same material as that of the outer shell **404** or the body of the brake drum.

The aforementioned process provides a brake drum manufactured by reducing the machining steps and by implementing economical methods to manufacture FGMMC pipes like centrifugal casting. Additionally, the FGMMC liner or FGMMC ring **302** imparts better wear properties and longer life to the FGMMC lined brake drum **402** due to the gradient properties imparted by the FGMMC material. Further, the surface bonding between the friction liner or FGMMC ring **302** and the brake drum or outer shell **404** is much stronger than that obtained by conventional methods.

Although the subject matter has been considered in considerable details with reference to certain preferred embodiment thereof, other embodiments are possible. As such the scope of appended claims should not be limited to the description of preferred embodiments contained therein.

## Claims

1. A brake drum (**402**) comprising:
an outer shell (**404**) formed from a metal alloy; and
a friction liner (**302**) attached to the outer shell,
**characterised in that** the friction liner (**302**) is formed from a functionally graded metal matrix composite (FGMMC) material comprising a metal alloy and an in-situ reinforced Titanium based ceramic.

2. The brake drum (**402**) as claimed in claim I, wherein the Titanium based ceramic is one of Titanium Carbide (TiC) and Titanium Di-boride (TiB₂).

3. The brake drum (**402**) as claimed in claim 1, wherein the Titanium based ceramic has particles of a size ranging from about 0.2µm to about 20µm.

4. The brake drum (**402**) as claimed in claim 1, wherein the friction liner (**302**) is a centrifugally cast FGMMC ring.

5. The brake drum (**402**) as claimed in claim 1, wherein the friction liner (**302**) comprises at least one layer (**202**) of a predefined thickness and a graded volume fraction of the Titanium based ceramic in the FGMMC material.

6. A method comprising:
a) preparing an in-situ reinforced functionally graded metal matrix composite (FGMMC) having a Titanium based ceramic;
b) extracting an FGMMC ring (302) from the FGMMC of step a);
c) placing the FGMMC ring (**302**) in a mould (**100**) of a brake drum (**402**); and
d) pouring a molten metal alloy in the mould (**100**) to form the brake drum (**402**).

7. The method as claimed in claim 6, comprising heating the FGMMC ring (**302**) at a predefined temperature before placing the FGMMC ring (**302**) in the mould (**100**).

8. The method as claimed in claim 7, wherein the predefined temperature is about 450°C.

9. The method as claimed in claim 6, comprising forming the FGMMC ring (**302**) from a FGMMC material pipe (**200**).

10. The method as claimed in claim 6, comprising machining the FGMMC ring (**302**) to provide a friction liner having an outer layer (**202**).

## Patentansprüche

1. Bremstrommel (402), umfassend eine äußere Hülle (404), die aus einer Metalllegierung gebildet ist; und einen Reibbelag (302), der an der äußeren Hülle befestigt ist, **dadurch gekennzeichnet, dass** der Reibbelag (302) aus einem funktional abgestuften Metallmatrixverbundstoff-Material (FGMMC-Material) gebildet ist, das eine Metalllegierung und eine lokal verstärkte titanbasierte Keramik umfasst.

2. Bremstrommel (402) nach Anspruch 1, wobei die titanbasierte Keramik eine von Titancarbid (TiC) und Titan-Di-Borid (T1 B₂) ist.

3. Bremstrommel (402) nach Anspruch 1, wobei die titanbasierte Keramik Teilchen einer Größe im Bereich von etwa 0,2 µm bis etwa 20 µm aufweist.

4. Bremstrommel (402) nach Anspruch 1, wobei der Reibbelag (302) ein Schleuderguss-FGMMC-Ring ist.

5. Bremstrommel (402) nach Anspruch 1, wobei der Reibbelag (302) mindestens eine Schicht (202) einer vordefinierten Dicke und einen abgestuften Volumenanteil der titanbasierten Keramik in dem FGMMC-Material umfasst.

6. Verfahren, umfassend:
a) Herstellen eines lokal verstärkten funktional abgestuften Metallmatrixverbundstoffes (FGMMC), mit einer titanbasierten Keramik;
b) Entnehmen eines FGMMC-Rings (302) aus dem FGMMC von Schritt a);
c) Anordnen des FGMMC-Rings (302) in einer Gussform (100) einer Bremstrommel (402) und
d) Gießen einer geschmolzenen Metalllegierung in die Gussform (100) zum Bilden der Bremstrommel (402).

7. Verfahren nach Anspruch 6, umfassend das Erwärmen des FGMMC-Rings (302) auf eine vordefinierte Temperatur vor dem Anordnen des FGMMC-Rings (302) in der Gussform (100).

8. Verfahren nach Anspruch 7, wobei die vorbestimmte Temperatur etwa 450 °-C beträgt.

9. Verfahren nach Anspruch 6, umfassend das Bilden des FGMMC-Rings (302) aus einem FGMMC-Materialrohr (200).

10. Verfahren nach Anspruch 6, umfassend das maschinelle Bearbeiten des FGMMC-Rings (302) zum Bereitstellen eines Reibbelags, der eine äußere Schicht (202) aufweist.

## Revendications

1. Tambour de frein (402) comprenant :
une enveloppe externe (404) formée à partir d'un alliage métallique ; et
une garniture de friction (302) attachée à l'enveloppe externe,
**caractérisé en ce que** la garniture de friction (302) est formée à partir d'un matériau composite à matrice métallique à gradient fonctionnel (FGMMC) comprenant un alliage métallique et une céramique à base de titane renforcée in situ.

2. Tambour de frein (402) selon la revendication 1, dans lequel la céramique à base de titane est l'une du carbure de titane (TiC) et du diborure de titane (TiB₂).

3. Tambour de frein (402) selon la revendication 1, dans lequel la céramique à base de titane possède des particules d'une taille allant d'environ 0,2 µm à environ 20 µm.

4. Tambour de frein (402) selon la revendication 1, dans lequel la garniture de friction (302) est une bague en FGMMC coulée par centrifugation.

5. Tambour de frein (402) selon la revendication 1, dans lequel la garniture de friction (302) comprend au moins une couche (202) d'une épaisseur prédéfinie et une fraction volumique graduée de la céramique à base de titane dans le matériau FGMMC.

6. Procédé comprenant :
a) la préparation d'un composite à matrice métallique à gradient fonctionnel (FGMMC) renforcé in situ comprenant une céramique à base de titane ;
b) l'extraction d'une bague en FGMMC (302) du FGMMC de l'étape a) ;
c) le placement de la bague en FGMMC (302) dans un moule (100) d'un tambour de frein (402) ; et
d) le versement d'un alliage métallique fondu dans le moule (100) pour former le tambour de frein (402).

7. Procédé selon la revendication 6, comprenant le chauffage de la bague en FGMMC (302) à une température prédéfinie avant de placer la bague en FGMMC (302) dans le moule (100).

8. Procédé selon la revendication 7, dans lequel la température prédéfinie est d'environ 450°C.

9. Procédé selon la revendication 6, comprenant la formation de la bague en FGMMC (302) à partir d'un tuyau en matériau FGMMC (200).

10. Procédé selon la revendication 6, comprenant l'usinage de la bague en FGMMC (302) pour fournir une garniture de friction comprenant une couche externe (202).
